(19) Europäisches Patentamt
European Patent Office
Office européen des brevets

(11) Veröffentlichungsnummer: **0 126 959**
**B1**

(12) # EUROPÄISCHE PATENTSCHRIFT

(45) Veröffentlichungstag der Patentschrift: **09.03.88**

(51) Int. Cl.⁴: **C 08 B 11/193**

(21) Anmeldenummer: **84104485.2**

(22) Anmeldetag: **19.04.84**

(54) **Verfahren zur Herstellung von wasserlöslichen Cellulosemischethern.**

(30) Priorität: **03.05.83 DE 3316124**

(43) Veröffentlichungstag der Anmeldung: **05.12.84 Patentblatt 84/49**

(45) Bekanntmachung des Hinweises auf die Patenterteilung: **09.03.88 Patentblatt 88/10**

(84) Benannte Vertragsstaaten: **AT BE CH DE FR GB IT LI NL SE**

(56) Entgegenhaltungen:
**FR - A - 1 295 128**
**FR - A - 1 497 780**
**GB - A - 734 924**

(73) Patentinhaber: **HOECHST AKTIENGESELLSCHAFT, Postfach 80 03 20, D-6230 Frankfurt am Main 80 (DE)**

(72) Erfinder: **Felcht, Utz-Hellmuth, Dr., Dipl.-Chem., Hubertusstrasse 2, D-6232 Bad Soden (DE)**
Erfinder: **Buchberger, Gerhard, Dipl.-Ing., Tannenring 56, D-6200 Wiesbaden-Auringen (DE)**

EP 0 126 959 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von wasserlöslichen Cellulosemischethern in drei Stufen.

Die Herstellung von Celluloseethern mit einheitlichen oder unterschiedlichen Arten von Ethersubstituenten ist bekannt (siehe z.B. Ullmanns Encyklopädie der technischen Chemie, Band 9, Stichwort «Celluloseäther», Verlag Chemie – Weinheim, 4. Auflage 1975, S. 192 ff.), wobei diese im allgemeinen entweder a) nach dem Prinzip der Ethersynthese nach Williamson durch Umsetzung von Cellulose mit Alkyl- oder Aralkylhalogeniden (unter stöchiometrischem Verbrauch einer Base) und/oder b) durch Umsetzung von Cellulose mit aktivierten, zu direkten Reaktionen mit Hydroxylgruppen befähigten Reaktionspartnern (in Anwesenheit katalytischer, d.h. unterstöchiometrischer Mengen einer Base) hergestellt werden:

a) $Cell\text{-}\underline{\overline{O}}\text{-}H + Hal\text{-}R^1 + BOH \rightarrow Cell\text{-}\underline{\overline{O}}\text{-}R^1 + H_2O + BHal$

b) $Cell\text{-}\underline{\overline{O}}\text{-}H$ +

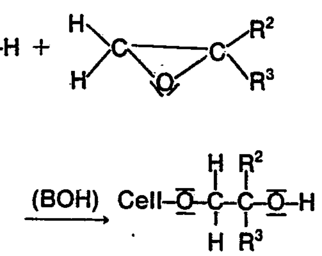


In diesen allgemeinen Gleichungen bedeuten:

$Cell\text{-}\underline{\overline{O}}\text{-}H$ eine zu verethernde Hydroxylgruppe am Cellulosemolekül,

Hal Chlor oder Brom,

$R^1$ einen Alkylrest von $C_1$ bis $C_{15}$, einen Aralkylrest von $C_7$ bis $C_{15}$, einen Carboxyalkylrest von $C_1$ bis $C_3$, einen Sulfonoalkylrest von $C_1$ bis $C_3$, einen Phosphonoalkylrest von $C_1$ bis $C_3$, einen Hydroxyalkylrest von $C_1$ bis $C_6$ oder einen N,N-Dialkylaminoalkylrest von $C_1$ bis $C_3$ für die Alkylgruppen,

$R^2$, $R^3$ Wasserstoff oder einen Alkylrest von $C_1$ bis $C_{13}$, wobei $R^2$ gleich $R^3$ oder davon verschieden ist,

BOH Base wie NaOH, Alkaly- oder Erdalkalihydroxide, oder eine quaternäre Ammoniumbase.

Durch gleichzeitiges oder stufenweises Einwirken von verschiedenen Veretherungsmitteln auf Cellulose werden auch Cellulosemischether hergestellt, wobei neben einem Reaktionsablauf nach nur einer der angegebenen Varianten a oder b, insbesondere auch Reaktionen durchgeführt werden, die nach beiden Varianten ablaufen. Beispiele für Reaktionsprodukte, die nach der Variante a) hergestellt werden können, sind: Methylcellulose (MC), Benzylcellulose (BC), Carboxymethylcellulose (CMC), Sulfonoethylcellulose (SEC), Phosphonomethylcellulose (PMC) oder N,N-Diethylaminoethylcellulose (DEAEC). Beispiele für Reaktionsprodukte, die nach der Variante b) hergestellt werden können, sind: Hydroxyethylcellulose (HEC) oder Hydroxypropylcellulose (HPC). Zu den Mischethern der Cellulose, deren Herstellung nach einer oder nach beiden der angegebenen Varianten ablaufen kann, zählen beispielsweise Methyl-hydroxyethylcellulose (MHEC), Ethyl-hydroxyethylcellulose (EHEC), Hydroxyethyl-hydroxypropylcellulose (HEHPC), Methylcarboxymethylcellulose (MCMC), Hydroxyethylphosphonomethylcellulose (HEPMC) oder Methylhydroxyethyl-hydroxypropylcellulose (MHEHPC). Unter dem Begriff «Celluloseether» sind im Rahmen der folgenden Ausführungen sowohl Produkte mit einem einheitlichen Substituenten wie Hydroxyethylcellulose als auch Produkte mit mindestens zwei verschiedenen Substituenten wie Methyl-carboxymethylcellulose zu verstehen.

Die meisten der bekannten Verfahren zur Herstellung von Celluloseethern werden in zwei Kernstufen durchgeführt:

1. Die Herstellung der «Alkalicellulose».
2. Die Veretherung des Cellulosemoleküls.

Zur Herstellung der «Alkalicellulose» wird Cellulose in kleinteiliger (z.B. gemahlener) Form in geeigneten technischen Aggregaten mit Wasser und Alkalihydroxiden (im allgemeinen NaOH, es sind aber auch andere Basen wie quaternäre Ammoniumbasen möglich) möglichst gleichmässig vermischt. Die Alkalihydroxide können dabei in fester Form oder in Form einer wässrigen Lösung zum Einsatz kommen. Für die Veretherungsreaktion selbst und damit für die Qualität des Reaktionsprodukts ist die Gleichmässigkeit und Intensität des Vermischens von entscheidender Bedeutung. Die Alkalisierung erfolgt im allgemeinen bei möglichst niedriger Temperatur, z.B. Raumtemperatur und weniger, um einen Abbau des Polymeren (das sogenannte «Reifen») zu unterdrücken; unter bestimmten Umständen, beispielsweise der späteren Herstellung niedrigviskoser Celluloseether, kann dieser Abbau jedoch auch erwünscht sein. In der Alkalisierungsstufe kann auch bereits das Veretherungsmittel zugegeben werden, wobei jedoch im allgemeinen zur Durchführung der eigentlichen Veretherungsreaktion die Temperatur noch erhöht werden muss.

Die eigentliche Veretherungsstufe wird im allgemeinen so durchgeführt, dass die in der ersten Stufe erzeugte Alkalicellulose zusammen mit dem inzwischen zugegebenen Veretherungsmittel auf Temperaturen zwischen 30 und 120 °C erhitzt wird. Dabei kann auch vorher ein Teil des in der ersten Stufe vorhandenen Wassers entfernt werden. Auch in der zweiten Stufe ist eine intensive Durchmischung für die Qualität des Reaktionsprodukts und für die Wirtschaftlichkeit des Verfahrens sehr wichtig, da beispielsweise eine gute Substitutionsausbeute bei möglichst geringem Mengeneinsatz an Veretherungsmittel(n) angestrebt wird.

Für beide Reaktionsstufen sind sowohl kontinuierliche als auch diskontinuierliche Verfahrensweisen bekannt. Es können bei bestimmten Reaktionskomponenten auch beide Stufen so zusammengefasst werden, dass keine Voralkalisierung der Cellulose stattfindet. Zur besseren Durchmischung des heterogenen Reaktionsgemenges können in beiden Stufen, oder zumindest in einer der beiden Stufen, Dispergierhilfsmittel (Suspensionsmittel) eingesetzt werden, wobei sowohl wasserlösliche als auch in Wasser mehr oder weniger unlösliche organische Lösemittel bekannt sind, dazu zählen beispielsweise:

Ethylenglykolmonoalkylether, Ethylenglykoldiethylether, Dioxan, Tetrahydrofuran, Alkanole (insbesondere Isopropanol oder tert. Butanol), Alkoxyalkanole, Toluol, Heptan, Gemische aus Tetrachlorkohlenstoff und Ethanol, Aceton, Methylethylketon; Mischungen aus Benzol, Toluol oder Xylol und Ethanol; Glykole, Dioxan; Mischungen aus Alkanen (ab $C_6$), Aromaten, aliphatischen Ketonen, aliphatischen Ethern oder halogenierten Alkanen und Alkanolen ($C_2$ bis $C_4$), Dimethylsulfoxid, Dioxan oder Tetrahydrofuran; Xylol, Gemisch aus tert.-Butanol und Aceton, Mischungen aus Alkanen oder Aromaten ($C_6$ bis $C_{12}$) und Alkanolen ($C_1$ bis $C_4$). In jüngster Zeit wurde als neues organisches Lösemittel auf diesem Anwendungsgebiet auch ein Ethylenglykoldiether, nämlich Dimethoxyethan vorgeschlagen:

In der prioritätsälteren, nicht-vorveröffentlichten DE-A 3 147 434 wird ein Verfahren zur Herstellung von Celluloseethern beschrieben, das in Gegenwart von Wasser, Basen und mindestens einem inerten organischen Lösemittel durchgeführt wird, wobei als solches Lösemittel Dimethoxyethan eingesetzt wird. Nach einer weiteren prioritätsälteren, nicht-vorveröffentlichten Patentanmeldung, nämlich der DE-A 3 306 621, wird bei der Celluloseetherherstellung ein Lösemittelgemisch eingesetzt, das neben Dimethoxyethan zusätzlich mindestens ein weiteres organisches Lösemittel aus der Gruppe Alkanole, Alkandiole und Alkoxyalkanole enthält.

Es besteht nun aber in der Praxis das Problem, dass zur Herstellung von Celluloseethern der weiter oben definierten Herstellungsvariante a) mindestens stöchiometrische Mengen Alkalihydroxid bezogen auf den gewünschten Alkyl- oder Aralkylhalogenidumsatzgrad eingesetzt werden müssen, wohingegen bei der Herstellung von Celluloseethern nach der Herstellungsvariante b) nur katalytische Mengen Alkalihydroxid erforderlich sind. Zuviel Alkalihydroxid bei der Herstellungsvariante b) ergibt bekanntermassen eine verschlechterte Wirksamkeit für die Umsetzung mit dem Veretherungsmittel. Hierbei ist Wirksamkeit als Quotient aus erzieltem Substitutionsgrad und Gesamteinsatz an Veretherungsmittel multipliziert mit 100 definiert. Ist nun aber die Herstellung von Mischethern der Cellulose erwünscht, und ist hierfür beispielsweise die Einführung von zwei Substituenten vorgesehen, von denen einer nach der Herstellungsvariante a) und der andere nach der Herstellungsvariante b) eingeführt wird, so stellt sich die Aufgabe, dies aus technischen und wirtschaftlichen Gründen so durchzuführen, dass die Wirksamkeit der Umsetzung mit beiden Veretherungsmitteln möglichst hoch wird. Dem widerspricht jedoch die an sich erforderliche Einsatzmenge an Alkalihydroxid, die für die Herstellungsvariante a) praktisch stöchiometrisch vorgeschrieben ist. Beispielhaft für derartige Mischether, bei deren Herstellung ein Substituent nach der Reaktionsvariante a), der andere nach der Reaktionsvariante b) eingeführt wird, sind MHEC, MHPC, CMHEC oder EHEC.

Eine ähnliche Zwangsabhängigkeit besteht aber auch bei solchen Mischethern, bei denen die Einführung von mindestens zwei unterschiedlichen Substituenten entweder nur nach der Variante a) oder nur nach der Variante b) erfolgt. Es kann dabei dann nämlich erforderlich sein, entweder unterschiedliche Alkalihydroxidmengen zur jeweiligen katalytisch beeinflussten Umsetzung zu verwenden oder aufgrund stark unterschiedlicher Reaktionsfreudigkeit der Veretherungsmittel abweichende Reaktionsbedingungen anzuwenden. Beispiele für derartige Cellulosemischether sind HEHPC, MCMC oder HEHBC.

Als Versuch zur Lösung dieser Problematik sind deshalb in der Vergangenheit mehrere Verfahren beschrieben worden, in denen bei der Herstellung von Cellulosemischethern mit beispielsweise zwei verschiedenen Substituenten die Veretherung in zwei Stufen durchgeführt wird.

In der SU-A 397 519 wird ein Verfahren zur Herstellung von MHPC in zwei Stufen durch Hydroxypropylierung einer abgepressten und zerkleinerten Alkalicellulose (mit einer 17- bis 22%igen NaOH-Lösung hergestellt) bei einem Verhältnis von Propylenoxid zu Cellulose von 0,9 bis 1,5 zu 1 beschrieben. Danach wird pulverförmiges NaOH in Mengen von 0,5 bis 0,7 Gew.-Teilen pro Gew.-Teil Cellulose zugegeben und abschliessend methyliert. Die Reaktionsprodukte sollen 17 bis 25% Hydroxypropylgruppen und 24 bis 30% Methoxylgruppen aufweisen, sie sollen in kaltem Wasser und organischen Lösemitteln löslich sein; das Verfahren wird diskontinuierlich ausgeführt. Nachteilig bei diesem Verfahren sind a) der Einsatz von pulverförmigen NaOH, was bekanntlich zu einer sehr ungleichmässigen Alkalisierung und damit auch nur zu mässigen Produktqualitäten führt, und b) die Nichtverwendung von flüssigen Dispergierhilfsmitteln, was ebenfalls nur zu ungleichmässig veretherten Produkten führt, die dann relativ hohe Rückstandswerte zeigen. Ausserdem scheint dieses Verfahren nur zur Herstellung von MHPC geeignet zu sein.

Aus der US-A 4 096 325 ist ein Verfahren zur Herstellung von MHPC bekannt, bei dem zunächst Alkalicellulose mit Propylenoxid in Anwesenheit von Toluol, Hexan oder DMF in einem Verhältnis von Propylenoxid zu Cellulose von 1 bis 8 zu 1 bei bis zu 110 °C umgesetzt wird. Danach, der $MS_{HP}$ liegt bei etwa 0,5 bis 7,0, wird das organische Lösemittel mechanisch (z. B. durch Filtrieren oder Dekantieren) wieder entfernt, und unter Zugabe von neuem Lösemittel, neuem NaOH, Wasser und Methylchlorid wird die Reaktion bei 40 bis 75 °C weitergeführt bis der $DS_M$ bei 1 bis 2,4 liegt. Gemäss Beispiel 2 wird das Lösemittel zwar möglicherweise nicht entfernt, dafür wird die zweite Veretherung aber bereits teilweise in der ersten Stufe ausgeführt. Nachteilig bei diesem Verfahren

sind a) die wenig wirtschaftliche und oftmals produktschädigende mechanische Entfernung der flüssigen Komponenten nach der ersten Stufe, b) die weitgehende Unlöslichkeit der Reaktionsprodukte in reinem Wasser und auch c) der Einsatz von eher hochsiedenden organischen Lösemitteln, die zudem teilweise nicht wasserlöslich sind.

Das zweistufige Verfahren zur Herstellung von wasserlöslichen Cellulosemischethern gemäss der DE-C 1 493 247 (= GB-A 1 003 662) wird so durchgeführt, dass man a) Cellulose mit einer 15- bis 25%igen wässrigen NaOH-Lösung alkalisiert, b) die Alkalicellulose abpresst und dann mit gasförmigem Alkylhalogenid oder Acrylnitril bis zu einem DS von 0,05 bis 0,5 umsetzt, c) anschliessend durch Waschen mit Wasser und Abpressen den Alkaligehalt auf weniger als 10% des Cellulosegewichts vermindert, d) dann die so vorbehandelte Cellulose allmählich mit gasförmigem Alkylenoxid bis zu einem MS von mehr als 1 umsetzt und e) schliesslich das nicht umgesetzte Alkylenoxid entfernt und die verbleibende kleine Restmenge an Alkali im Produkt in der Gasphase neutralisiert. Nachteilig bei diesem Verfahren sind a) die Nichtverwendung von flüssigen Dispergierhilfsmitteln, was zu ungleichmässig veretherten Produkten führt, und b) die Durchführung der Alkylierung [als Beispiel für die oben definierte Verfahrensvariante a)] in der ersten Stufe, wodurch das entstehende Zwischenprodukt wegen des relativ hohen Restalkaligehalts vor der zweiten Veretherungsstufe durch Auswaschen zwischengereinigt werden muss. Im übrigen wird zwar behauptet, dass die Veretherung mit gasförmigen Veretherungsmitteln bessere Produkte liefere, jedoch weiss der Durchschnittsfachmann auf diesem Gebiet, dass ein Gas/Feststoff-Austausch ungleichmässiger veretherte Produkte ergibt, als eine Reaktionsführung mit Hilfe eines Dispergierhilfsmittels, welches das Veretherungsmittel lösen kann und somit einen intensiveren und wirksameren Stoffaustausch ermöglicht.

In der DE-B 1 222 030 (= GB-A 833 834) wird ein Verfahren zur Herstellung von wasserlöslichen und thermoplastischen Methyl-hydroxyalkylcellulosen beschrieben, bei dem man a) Cellulose mit einer wässrigen Alkalihydroxidlösung von 30 bis 60% behandelt, bis sich ein Gewichtsverhältnis von NaOH zu Cellulose von 0,7 bis 1,5 einstellt, und man b) die Alkalicellulose in Folge oder gleichzeitig mit einem Hydroxyalkylierungsmittel und Methylchlorid umsetzt, wobei pro Gew.-Teil Cellulose 0,25 bis 0,8 Gew.-Teile Propylenoxid oder molekularäquivalente Mengen Ethylenoxid oder 0,15 bis 0,8 Gew.-Teile Butylenoxid und 1,1 bis 2,0 Gew.-Teile Methylchlorid verwendet werden. Die Reaktion wird zunächst bei bis zu 40 °C durchgeführt und dann langsam auf höchstens 80 °C gesteigert. Nachteilig bei diesem Verfahren sind a) die Nichtverwendung von flüssigen Dispergierhilfsmitteln, b) die einmalige Alkalisierung, die damit für die Hydroxyalkylierung einen zu hohen Alkaligehalt vorgibt, der u.a. zu Nebenreaktionen (Hydrolyse des Alkylenoxids zu Alkylenglykolen) führt, und c) die geringe Wirksamkeit des eingesetzten Methylchlorids bzw. Propylenoxids von 35 bzw. 14% (nach Beispiel 1).

Aufgabe der vorliegenden Erfindung ist es deshalb, ein Verfahren zur Herstellung von wasserlöslichen Cellulosemischethern, d.h. von Celluloseethern mit mindestens 2 Arten von unterschiedlichen Substituenten, aufzufinden, bei dem die Produkte wirtschaftlich, d.h. insbesondere mit hoher selektiver Wirksamkeit in den Veretherungsstufen, herstellbar sind und eine ausgezeichnete Produktqualität, d.h. eine gleichmässige Veretherung und damit gute Löslichkeitseigenschaften und möglichst geringe oder keine Rückstände, zeigen.

Die Erfindung geht aus von dem Verfahren zur Herstellung von Cellulosemischethern in den Stufen

a) Alkalisierung der Cellulose in Gegenwart eines organischen Lösemittels und Wasser,
b) erste Veretherung der Alkalicellulose in Anwesenheit einer Base mit mindestens einem ersten Veretherungsmittel,
c) nach Erhöhung der Basenmenge zweite Veretherung des in Stufe b) hergestellten Celluloseethers mit mindestens einem zweiten, vom ersten Veretherungsmittel verschiedenen Veretherungsmittel,

dadurch gekennzeichnet, dass man für die Stufen a) und b) Dimethoxyethan oder dessen Gemische mit einem Alkanol, einem Alkandiol und/oder einem Alkoxyalkanol als organisches Dispergierhilfsmittel einsetzt und dieses vor der Durchführung der Stufe c) aus der Reaktion destillativ entfernt.

Die vorher gebrauchten Begriffe sind weiter oben in der Beschreibungseinleitung erläutert, so dass an dieser Stelle nicht mehr näher darauf eingegangen werden muss. Das organische Lösemittel Dimethoxyethan ist an sich literaturbekannt, es wird für das vorliegende Anwendungsgebiet ausdrücklich auf die beiden weiter oben zitierten Patentanmeldungen verwiesen. Zu den Alkanolen, Alkandiolen und Alkoxyalkanolen zählen insbesondere Alkanole von $C_1$ bis $C_5$, Alkandiole von $C_2$ bis $C_3$ (oder auch oligomere oder polymere Individuen mit Einheiten aus diesen Alkandiolen) und Alkoxy($C_1$ bis $C_4$)alkan($C_2$ oder $C_3$)ole, bevorzugt werden Methanol, Ethanol, Isopropanol, tert. Butanol und Ethylenglykol (Ethandiol(1,2)). Alle der genannten organischen Lösemittel sind einzeln oder im Gemisch, insbesondere in Dimethoxyethan enthaltenden Gemischen, im Alkalisierungs- und/oder Veretherungsgemisch vorhanden. Es sind – unabhängig von dem oder den Veretherungsmittel(n), d.h. von der Art des bzw. der zu erzielenden Ethersubstituenten und sofern überhaupt Mischungen eingesetzt werden – grundsätzlich alle Mischungsverhältnisse zwischen den Lösemitteln, insbesondere zwischen Dimethoxyethan und dem oder den anderen organischen Lösemitteln möglich, bevorzugt werden jedoch nicht mehr als 50 Gew.-% an Alkanolen, Alkandiolen und/oder Alkoxyalkanolen dem Dimethoxyethan zugesetzt, insbesondere 0,1 bis 30 Gew.-%.

Von den Veretherungsmitteln, die in den eingangs dargestellten Verfahrensvarianten möglich sind, werden Ethylenoxid, Propylenoxid, Methylchlorid und/oder Monochloressigsäure oder eines ihrer Salze oder hydrolysierbaren Derivate bevorzugt. Das erfindungsgemässe Verfahren kann beispielsweise so durchgeführt werden, dass organisches Lösemittel in beiden Veretherungsstufen b) und c) und gegebenenfalls auch in der Alkalisierungsstufe a) anwesend ist; bevorzugt wird es jedoch so durchgeführt, dass organisches Lösemittel in der Veretherungsstufe b) und gegebenenfalls auch in der Alkalisierungsstufe a) anwesend ist und vor Beginn der Veretherungsstufe c) gemeinsam mit den übrigen unter der Siedetemperatur des Wassers liegenden Komponenten destillativ aus dem Gemisch entfernt wird. Diese letztere Variante wird insbesondere bei Einsatz der Veretherungsmittel Ethylenoxid oder Propylenoxid in der ersten Veretherungsstufe [Stufe b)] und Methylchlorid in der zweiten Veretherungsstufe [Stufe c)] und bei Einsatz von Dimethoxyethan und/oder Isopropanol und gegebenenfalls Methanol als organisches Lösemittel angewandt. Dadurch ist insbesondere der Einsatz eines grossen Überschusses an Alkylenoxid in der ersten Veretherungsstufe möglich, beispielsweise um möglichst kurze Reaktionszeiten zu erzielen oder um eine gleichmässigere Verteilung der Substitution über die Molekülkette der Celluloseether zu bewirken, der dann vor Durchführung der zweiten Veretherungsstufe durch einfaches Ausdämpfen zurückgenommen und ohne weitere Reinigung wieder im Verfahren eingesetzt werden kann (Recycling). Das Verfahren soll bei allen Varianten zu wasserlöslichen Produkten führen, d.h. die Produkte weisen DS- und/oder MS-Werte auf, die eine Wasserlöslichkeit bewirken; darunter wird insbesondere verstanden, dass die Produkte zu mindestens 90%, insbesondere zu mindestens 97% wasserlöslich sind.

Das erfindungsgemässe Verfahren kann diskontinuierlich oder auch kontinuierlich in einem oder mehreren der von der Celluloseetherchemie her bekannten Aggregate (z.B. Kneter, Rührkessel oder Wurfmischer) durchgeführt werden. Wenn die Temperatur des Reaktionsgemisches so hoch gewählt wird, dass sie über der Siedetemperatur des Gemisches aus organischen Lösemitteln/$H_2O$ liegt, empfiehlt sich die Durchführung des erfindungsgemässen Verfahrens in einer Druckapparatur; auch bei Einsatz von unter Normalbedingungen (Normaldruck, Raumtemperatur) bereits gasförmigen Reaktionskomponenten wird üblicherweise in einer Druckapparatur gearbeitet (z.B. bei Einsatz von Ethylenoxid als Veretherungsmittel). Die in den folgenden Ausführungen angegebenen Mengenanteile für die Komponenten geben lediglich die Summe der Anteile der zur Reaktion erforderlichen Komponenten zu Beginn der jeweiligen Veretherungsstufe an, dann liegt bei der separaten Alkalisierungsstufe bereits ein Teil der Cellulose und des Alkalimetallhydroxids als Alkalicellulose vor; oder wenn das Veretherungsmittel beispielsweise in der Säureform (z.B. Monochloressigsäure zur Herstellung vom CMC) in das Reaktionsgemisch eingegeben wird, so müssen zur Neutralisation zusätzliche Basenanteile eingesetzt werden.

Die eingesetzte Cellulose ist entweder natürlicher Herkunft, beispielsweise Baumwoll-Linters oder Holz-Zellstoff, oder liegt in regenerierter Form wie als Cellulosehydrat vor; die Teilchengrösse der Cellulose sollte vor Beginn der Reaktion möglichst kleiner als etwa 2,5 mm, insbesondere kleiner als etwa 1 mm sein, wobei diese Teilchengrösse beispielsweise durch Mahlung der längerfaserig angelieferten Cellulose zu «Pulvern» erreicht werden kann. Im erfindungsgemässen Verfahren können – verglichen mit bekannten Verfahren – bei gleicher Wirksamkeit auch Teilchengrössen zum Einsatz zu kommen, die sonst eher nicht verwendet werden.

Die Basen werden bevorzugt als Alkalimetallhydroxid – üblicherweise NaOH, aber auch KOH oder LiOH – in fester Form oder in gelöster Form als wässrige Alkalimetallhydroxid-Lösung (beispielsweise in 10 bis 50 gew.-%iger Form) eingesetzt, aber auch Ammoniumbasen können verwendet werden. Bevorzugt werden im erfindungsgemässen Verfahren etwa 1 bis 30 Gew.-Teile organisches Lösemittel pro Gew.-Teil Cellulose eingesetzt, besonders bevorzugt 2 bis 18 Gew.-Teile. Sofern Alkalimetallhydroxide als Basen eingesetzt werden, beträgt ihr Anteil in der jeweiligen Stufe im allgemeinen 0,5 bis 12,0 Mol, insbesondere 0,8 bis 6,0 Mol, pro Mol Cellulose (als Anhydro-D-Glukose-Einheit gerechnet), dieser Anteil richtet sich aber – wie weiter oben und in den Beispielen ausgeführt – nach der Veretherungsvariante a) oder b). In den Stufen a) und b) liegt der Alkalimetallhydroxidanteil bevorzugt bei etwa 0,5 bis 1,5 Mol und in der Stufe b) (zumindest bei der Herstellung von MHEC oder MHPC) bevorzugt bei etwa 2,0 bis 6,0 Mol. Der Wasseranteil im Reaktionsgemisch wird zweckmässig so gewählt, dass er im Bereich von 5 bis 25 Mol pro Mol Cellulose liegt; oder wenn als Bezugsgrösse das Flüssigkeitsgemisch organische Lösemittel/Wasser dienen soll, so liegt der Anteil des Wassers im Gemisch bei 3 bis 40 Gew.-%. Als Veretherungsmittel werden bevorzugt Alkylchloride von $C_1$ bis $C_3$, Alkylenoxide von $C_2$ bis $C_4$ und/oder Chloralkansäuren von $C_2$ bis $C_4$ bzw. deren Salze oder hydrolysierbare Ester eingesetzt, insbesondere Methylchlorid, Ethylchlorid, Ethylenoxid, Propylenoxid und/oder Monochloressigsäure oder ein entsprechendes Salz oder Ester. Es können aber auch Butylenoxid-1,2, Monochlorpropionsäure, Chlorethansulfonsäure, Vinylsulfonsäure, Acrylnitril, Chlormethanphosphonsäure, 1-N,N-Diethylamino-2-chlorethan oder 2,3-Epoxypropyl-trimethylammoniumchlorid zur Reaktion gebracht werden. Der Anteil des Veretherungsmittels beträgt jeweils 0,05 bis 30 Mol, insbesondere 0,1 bis 10 Mol, pro Mol Cellulose. Bei dem besonders bevorzugten Verfahren zur Herstellung von MHEC oder MHPC liegt der Molanteil des Veretherungsmittels in der Stufe b bei 0,05 bis 2,0 Mol und in der Stufe c) bei 1,0 bis 30 Mol.

Bei der praktischen Durchführung des erfindungsgemässen Verfahrens wird bevorzugt die Cellulose im Gemisch aus organischen Lösemitteln, Wasser und Alkalimetallhydroxid (oder quaternärer Ammoniumbase) alkalisiert, wonach die Zugabe des Veretherungsmittels in den beiden oben dargestellten Stufen (abhängig von der Art der Veretherungsmittel) erfolgt. Es ist aber auch eine Alkalisierung ohne Anwesenheit der organischen Lösemittel möglich, wobei deren Zugabe dann erst bei mindestens einer der Veretherungsstufen erfolgt. Die jeweiligen Reaktionsgemische und Reaktionsgefässe können bekanntermassen auch mit Inertgasen wie Stickstoff gespült werden, um Sauerstoff zu entfernen und so hohe Viskositäten der Reaktionsprodukte zu erreichen; auch sogenannte Antioxidantien wie Pyrogallol oder Gallussäure können zur Verhinderung des Viskositätsabbaus (Depolymerisation) zugesetzt werden.

Alle Stufen werden in der Regel unter guter Durchmischung gefahren. In der separaten Alkalisierungsstufe wird üblicherweise bei Raumtemperatur (von 0 °C, insbesondere von 15 bis 30 °C) gearbeitet, die Veretherung verläuft besonders erfolgreich bei einer Temperatur zwischen 30 und 120 °C, insbesondere bis zu 110 °C. Dabei wird in der Regel die erste Veretherungsstufe bei niedrigerer Temperatur gefahren, dann insbesondere die Basenmenge erhöht und die zweite Veretherungsstufe bei höherer Temperatur gefahren. Wenn das Verfahren ohne Einsatz von Druckaggregaten ablaufen soll, empfiehlt sich ein Arbeiten unterhalb der Siedetemperatur der organischen Lösemittel bzw. von azeotropen Gemischen aus diesen und Wasser. Bei Einsatz von gasförmigem Veretherungsmittel (wie Ethylenoxid oder Methylchlorid) ist allerdings ein druckloses Arbeiten nicht zweckmässig. Der sich maximal im Reaktionsgefäss einstellende Druck entspricht der Summe der Partialdrucke der Komponenten im Reaktionsgemisch.

Die erforderlichen Zeiten in den Veretherungsstufen liegen – je nach Reaktionstemperatur – im allgemeinen zwischen 20 min und 8 h. In einer Trennvorrichtung (z.B. einer Zentrifuge) wird das Rohprodukt, bevorzugt nach Zugabe von Säure bis zur Neutralisation der noch unverbrauchten Basen, zunächst vom Hauptteil der flüssigen Komponenten befreit und kann gegebenenfalls danach einer Extraktion zur Entfernung anhaftender Salze unterzogen werden; abschliessend wird es getrocknet und kann gegebenenfalls gemahlen, mit weiteren Komponenten vermischt oder auch granuliert werden; diese Aufarbeitungs-, Reinigungs- und Nachbehandlungsmethoden sind die in der Celluloseetherchemie üblichen und benötigen deshalb keine ausführliche Beschreibung.

Zu den besonderen Vorteilen des erfindungsgemässen Verfahrens zählen, neben den bereits vorher aufgeführten, die folgenden. Die in der ersten Veretherungsstufe eingesetzte Basenmenge, die dort grundsätzlich nur katalytisch benötigt wird, steht vollständig für die zweite Veretherungsstufe zum Verbrauch zur Verfügung; dies gilt insbesondere auch für die Variante, bei der die organischen Lösemittel und gegebenenfalls ein Überschuss an Veretherungsmittel nach der ersten und vor Beginn der zweiten Veretherungsstufe durch Ausdämpfen grösstenteils entfernt werden, da die Base, insbesondere ein Alkalihydroxid dabei nicht entfernt wird. Es gelingt durch die grundsätzlich unabhängig durchführbaren Stufen, in jeder Stufe die für eine optimale Produktqualität und eine ökonomische und ökologische Verfahrensweise erforderlichen Mengenverhältnisse und Verfahrensparameter einzustellen. Der Einsatz von wasserlöslichen oder grösserenteils wasserlöslichen organischen Lösemitteln führt zu einer Verbesserung des Stoffaustauschs und damit zu einer verbesserten Wirksamkeit der einzusetzenden Veretherungsmittel, dies gilt insbesondere für das Lösemittel Dimethoxyethan oder dieses enthaltende Gemische.

Die nach dem erfindungsgemässen Verfahren herstellbaren Celluloseether können auf den bekannten Gebieten der Technik eingesetzt werden, also beispielsweise als Verdickungsmittel, Klebstoff, Zusatzmittel auf dem Baustoffgebiet, Zusatzmittel auf dem Lebensmittelgebiet o.ä.

In den folgenden Beispielen verhalten sich Gew.-Teile zu Vol.-Teilen wie kg zu $dm^3$, die Prozentangaben sind auf das Gewicht bezogen. Die angegebenen Viskositätswerte wurden – wenn nichts anderes angegeben ist – im Höppler-Kugelfallviskosimeter in 2%iger wässriger Lösung bei 20 °C bestimmt. Der «DS» ist der Substitutionsgrad, d.h. die mittlere Anzahl von substituierten OH-Gruppen pro Anhydro-D-glucose-Einheit; er liegt bei Cellulose im Bereich von 0,0 bis 3,0. Der «MS» ist der molar Substitutionsgrad, d.h. die mittlere Anzahl von Molen des substituierenden Reagens, die pro Mol Anhydro-D-glucose-Einheit etherartig gebunden werden; er kann bei Cellulose auch grösser als 3,0 sein; er wird normalerweise anstelle des DS zur Charakterisierung solcher Substituenten am Celluloseethermolekül verwendet, die durch Mehrfachsubstitution an einer OH-Gruppe entstehen können, d.h. beispielsweise beim Hydroxyalkylsubstituenten, weil die entstehenden OH-Gruppen der Hydroxyalkylgruppen ebenfalls – wie die OH-Gruppen der Cellulose selbst – substituierbar sind.

Beispiel 1

Es werden 172 Gew.-Teile gemahlener, lufttrokkener Fichtenzellstoff mit 12,5 Gew.-Teilen Dimethoxyethan pro Gew.-Teil Cellulose (90%iges Azeotrop mit Wasser) im Rührautoklaven gemischt. Nach Inertisierung mit Stickstoff werden 80,8 Gew.-Teile einer technischen etwa 49,5%igen NaOH-Lösung zugegeben, und es wird während 30 min bei Raumtemperatur gerührt. Nach Zugabe von 22 Gew.-Teilen Ethylenoxid erwärmt man die Dispersion unter Rühren auf 70 °C und belässt sie während 60 min bei dieser Temperatur. Anschliessend unterwirft man das Reaktionsgemisch einer Vakuumdestillation zur möglichst restlosen Entfernung des Dispergierhilfsmittels und gegebenenfalls des Überschusses an Ethylenoxid, wobei das Destillat in einer gekühlten Vorlage gesammet und in einem neuen Ansatz oder kontinuierlich wiederverwendet werden kann. Das alkalische Reaktionsprodukt wird in einem Mischer mit 210 Gew.-Teilen der NaOH-Lösung während 45 min bei Raumtemperatur intensiv vermischt und anschliessend wieder in den Rührautoklaven überführt. Dort werden 1250 Gew.-Teile Methylchlorid zugesetzt und man methyliert bei 85 °C Reaktionstemperatur während 1 h. Nach Abtrennung des überschüssigen Veretherungsmittels wird die erhaltene MHEC mit heissem Wasser salzfrei gewaschen und getrocknet. Es resultiert ein klarlösliches Produkt mit einem $DS_M$ von 1,70 und einem $MS_{HE}$ von 0,30.

Beispiel 2

Es wird nach den Angaben des Beispiels 1 verfahren, jedoch wird die Hydroxyethylierung nur während 30 min bei 70 °C Reaktionstemperatur durchgeführt und dann das Reaktionsgemisch ohne Destillation direkt auf Raumtemperatur abgekühlt. Anschliessend werden 236 Gew.-Teile der wässrigen NaOH-Lösung zudosiert, und man rührt die Dispersion während 30 min nach. Im Anschluss daran wird die stark alkalische Dispersion auf 70 °C aufgeheizt, man destilliert wie im Beispiel 1 das Dispergierhilfsmittel ab und methyliert nach Zugabe von 1250 Gew.-Teilen Methylchlorid. Das nach der Heisswasserwäsche erhaltene Produkt ist klarlöslich und hat einen $DS_M$ von 1,72 und einen $MS_{HE}$ von 0,21.

Beispiel 3

Es wird nach den Angaben des Beispiels 1 verfahren, es werden jedoch nach der Hydroxyethylierung bei Reaktionstemperatur 196 Gew.-Teile der wässrigen NaOH-Lösung zugesetzt, und die Dispersion wird bei 70 °C während 30 min nachgerührt. Anschliessend wird wie in Beispiel 1 abdestilliert und methyliert nach Zugabe von 1250 Gew.-Teilen Methylchlorid. Das ausgewaschene Produkt ist klarlöslich und hat einen $DS_M$ von 1,63 sowie einen $MS_{HE}$ von 0,29.

Beispiel 4

Es wird nach den Angaben des Beispiels 3 verfahren, es werden jedoch zur Hydroxyethylierung 26,4 Gew.-Teile Ethylenoxid eingesetzt und nach der Hydroxyethylierung 283 Gew.-Teile der wässrigen NaOH-Lösung zugesetzt. Anschliessend arbeitet man in der beschriebenen Weise weiter. Es resultiert ein klarlösliches Produkt mit einem $DS_M$ von 1,81 und einem $MS_{HE}$ von 0,36.

Beispiel 5

Es wird zunächst nach den Angaben des Beispiels 1 alkalisiert. Nach Zugabe von 58 Gew.-Teilen Propylenoxid wird die Dispersion auf 105 °C erwärmt und während 60 min bei dieser Temperatur belassen. Anschliessend kühlt man auf 70 °C ab und führt die Vakuumdestillation zur Entfernung des Dispergierhilfsmittels und des Überschusses an Propylenoxid durch. Das Destillat enthält dabei etwa 33% des eingesetzten Propylenoxids. Das alkalische Reaktionsprodukt wird mit 178 Gew.-Teilen der wässrigen NaOH-Lösung während 30 min bei Raumtemperatur intensiv vermischt und anschliessend im Rührautoklaven mit 1250 Gew.-Teilen Methylchlorid wie im Beispiel 1 methyliert. Nach Heisswasserwaschung wird ein klarlösliches Produkt mit einem $DS_M$ von 1,60 und einem $MS_{HP}$ von 0,28 erhalten.

Beispiel 6

Es wird zunächst nach den Angaben des Beispiels 1 alkalisiert. Nach Zugabe von 29 Gew.-Teilen Propylenoxid und der 60 minütigen Hydroxypropylierung bei 105 °C wird die Dispersion auf 70 °C abgekühlt. Man setzt 236 Gew.-Teile der wässrigen NaOH-Lösung zu und alkalisiert während 30 min bei 70 °C. Anschliessend erfolgt eine Vakuumdestillation, bei der das als Dispergierhilfsmittel eingesetzte Azeotrop sowie Propylenoxid in einer Menge von 30% (bezogen auf eingesetztes Propylenoxid) als Destillat zurückgewonnen werden. Das nach der Destillation verbleibende Reaktionsgemisch wird wie im Beispiel 5 in Überschuss von Methylchlorid methyliert. Das ausgewaschene Produkt ist klarlöslich und hat einen $DS_M$ von 1,78 und einen $MS_{HP}$ von 0,15.

Beispiel 7

Es werden 172 Gew.-Teile gemahlener, lufttrokkener Fichtenzellstoff in einem Mischaggregat mit 3 Gew.-Teilen Dimethoxyethan (90%iges Azeotrop) pro Gew.-Teil Cellulose vermischt. Man gibt 80,8 Gew.-Teile der wässrigen NaOH-Lösung zu und mischt während 45 min bei Raumtemperatur. Nach Zugabe von 8,8 Gew.-Teilen Ethylenoxid wird unter ständigem Mischen auf 70 °C erwärmt und die Reaktion innerhalb 60 min durchgeführt. Anschliessend werden 242 Gew.-Teile der wässrigen NaOH-Lösung bei 70 °C während 10 min eingemischt, und darauffolgend wird das Dispergierhilfsmittel abdestilliert; das Destillat enthält weniger als 0,01% Ethylenoxid. Zur etwa 35 bis 40 °C warmen Reaktionsmischung werden 3 Gew.-Teile wässriges 96%iges Dimethoxyethan und 191,5 Gew.-Teile Methylchlorid zugegeben. Anschliessend wird die Mischung auf 100 °C aufgeheizt und während 60 min bei dieser Temperatur unter stetigem Mischen belassen. Nach Beendigung der Reaktion werden die verdampfbaren Nebenprodukte sowie das Dimethoxyethan im Vakuum ausgedämpft. Die erhaltene MHEC wird salzfrei gewaschen, sie ist klarlöslich und hat einen $DS_M$ von 1,69 und einen $MS_{HE}$ von 0,14.

Beispiel 8

Es wird nach den Angaben des Beispiels 7 verfahren, jedoch wird direkt nach der Hydroxyethylierung bei 70 °C abdestilliert; das Destillat enthält weniger als 0,01% Ethylenoxid. Anschliessend erfolgt die Zugabe von 3 Gew.-Teilen Dimethoxyethan (90%iges Azeotrop) pro Gew.-Teil Cellulose und darauffolgend von 242 Gew.-Teilen wässriger NaOH-Lösung. Die Alkalisierung erfolgt unter stetigem Mischen innerhalb von 10 min bei 40 °C. Nach Zugabe von 191,5 Gew.-Teilen Methylchlorid wird wie in Beispiel 7 methyliert und aufgearbeitet. Das ausgewaschene Produkt ist klarlöslich und weist einen $DS_M$ von 1,72 und einen $MS_{HE}$ von 0,14 auf.

Beispiel 9

Es wird nach den Angaben des Beispiels 7 verfahren, jedoch gibt man nach erfolgter Hydroxyethylierung 263 Gew.-Teile der wässrigen NaOH-Lösung zum Gemisch und alkalisiert während 10 min bei 70 °C unter stetigem Mischen. Anschliessend wird das Dimethoxyethan im Vakuum abdestilliert; das Destillat enthält kein Ethylenoxid. Zur etwa 40 °C warmen Reaktionsmischung werden 378 Gew.-Teile Methylchlorid gegeben, und man heizt auf 85 bis 90 °C, die Methylierung wird innerhalb 1 h bei dieser Temperatur durchgeführt. Das überschüssige Methylchlorid wird mit den verdampfbaren Nebenprodukten abdestilliert. Die nach Heisswasserwäsche erhaltene MHEC hat einen $DS_M$ von 1,64 und einen $MS_{HE}$ von 0,13.

Beispiel 10

In einem Mischaggregat werden 172 Gew.-Teile gemahlener, lufttrockener Fichtenzellstoff mit 5 Gew.-Teilen wässrigem Dimethoxyethan (90%iges Azeotrop) pro Gew.-Teil Zellstoff vorgemischt, inertisiert und mit 80,8 Gew.-Teilen der wässrigen NaOH-Lösung versetzt. Man alkalisiert während 45 min bei 20 bis 25 °C. Anschliessend werden 88 Gew.-Teile Ethylenoxid zugegeben und man heizt das Reaktionsgemisch innerhalb 45 min auf 70 °C. Die Reaktion wird im Verlauf von 60 min beendet. Danach wird das Dispergierhilfsmittel im Vakuum abdestilliert. In die 35 bis 40 °C warme ausgedämpfte Mischung werden 3 Gew.-Teile Isopropanol (87%iges Azeotrop) pro Gew.-Teil Zellstoff eingemischt, man gibt 72,7 Gew.-Teile der wässrigen NaOH-Lösung zu und alkalisiert während 30 min bei 35 bis 40 °C. Anschliessend werden 106,3 Gew.-Teile einer wässrigen, 80gew.-%igen Monochloressigsäure-Lösung zudosiert. Man heizt die Mischung in 30 min auf 75 °C und führt die Reaktion innerhalb 60 min durch. Das Isopropanol wird danach in bekannter Weise durch Vakuumdestillation entfernt und kann wiederverwendet werden. Die resultierende CMHEC kann bei Bedarf neutralisiert und gewaschen werden. Die Analyse ergibt einen $MS_{HE}$ von 1,25 und einen $DS_{MC}$ von 0,67.

Tabelle

| Bsp. | Produktart | Zugesetzte Molmengen pro Mol Cellulose an NaOH in Stufe a | vor Stufe c | Veretherungsmittel in Stufe b | in Stufe c | Vorhandene Mengen an organischem Lösemittel in Gew.-Teilen pro Gew.-Teil Cellulose in Stufe a | in Stufe b | in Stufe c |
|---|---|---|---|---|---|---|---|---|
| 1 | MHEC | 1,0 | 2,60 | 0,5 | 25 | 11,2 | 11,2 | – |
| 2 | MHEC | 1,0 | 2,90 | 0,5 | 25 | 11,2 | 11,2 | – |
| 3 | MHEC | 1,0 | 2,40 | 0,5 | 25 | 11,2 | 11,2 | – |
| 4 | MHEC | 1,0 | 3,50 | 0,6 | 25 | 11,2 | 11,2 | – |
| 5 | MHPC | 1,0 | 2,20 | 1,0 | 25 | 11,2 | 11,2 | – |
| 6 | MHPC | 1,0 | 2,90 | 0,5 | 25 | 11,2 | 11,2 | – |
| 7 | MHEC | 1,0 | 3,00 | 0,2 | 3,8 | 2,7 | 2,7 | 2,9 |
| 8 | MHEC | 1,0 | 3,00 | 0,2 | 3,8 | 2,7 | 2,7 | 2,7 |
| 9 | MHEC | 1,0 | 3,25 | 0,2 | 7,5 | 2,7 | 2,7 | – |
| 10 | CMHEC | 1,0 | 1,90 | 2,0 | 0,9 | 4,5 | 2,6 | 2,6 |

**Patentansprüche**

1. Verfahren zur Herstellung von wasserlöslichen Cellulosemischethern in den Stufen

a) Alkalisierung der Cellulose in Gegenwart eines organischen Lösemittels und Wasser,

b) erste Veretherung der Alkalicellulose in Anwesenheit einer Base mit mindestens einem ersten Veretherungsmittel,

c) nach Erhöhung der Basenmenge zweite Veretherung des in Stufe b) hergestellten Celluloseethers mit mindestens einem zweiten, vom ersten Veretherungsmittel verschiedenen Veretherungsmittel,

dadurch gekennzeichnet, dass man für die Stufen a) und b) Dimethoxyethan oder dessen Gemische mit einem Alkanol, einem Alkandiol und/oder einem Alkoxyalkanol als organisches Dispergierhilfsmittel einsetzt und dieses vor der Durchführung der Stufe c) aus der Reaktion destillativ entfernt.

2. Verfahren nach Anspruch 1, dadurch gekennzeichnet, dass man die Veretherung in der Stufe b) mit einer Verbindung der allgemeinen Formel

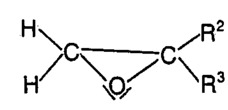

in der $R^2$, $R^3$ Wasserstoff oder einen Alkylrest von $C_1$ bis $C_{13}$ bedeuten, wobei $R^2$ gleich $R^3$ oder davon verschieden ist, durchführt.

3. Verfahren nach Anspruch 1 oder 2, dadurch gekennzeichnet, dass man die Veretherung in der Stufe c) mit einer Verbindung der allgemeinen Formel

$$Hal–R^1$$

in der $R^1$ einen Alkylrest von $C_1$ bis $C_{15}$, einen Aralkylrest von $C_7$ bis $C_{15}$, einen Carboxyalkylrest von $C_1$ bis $C_3$, einen Sulfonoalkylrest von $C_1$ bis $C_3$, einen Phosphonoalkylrest von $C_1$ bis $C_3$, einen Hydroxyalkylrest von $C_1$ bis $C_6$ oder einen N,N-Dialkylaminoalkylrest von $C_1$ bis $C_3$ für die Alkylgruppen und Hal Chlor oder Brom bedeuten, durchführt.

4. Verfahren nach einem der Ansprüche 1 bis 3, dadurch gekennzeichnet, dass man im Gemisch mit Dimethoxyethan ein Alkanol von $C_1$ bis $C_5$, ein Alkandiol von $C_2$ bis $C_3$ und/oder ein Alkoxy($C_1$ bis $C_4$)alkan($C_2$ oder $C_3$)ol einsetzt.

5. Verfahren nach Anspruch 2, dadurch gekennzeichnet, dass man die Veretherung der Stufe b) mit Ethylen- und/oder Propylenoxid durchführt.

6. Verfahren nach Anspruch 3, dadurch gekennzeichnet, dass man die Veretherung der Stufe c) mit Methylchlorid oder Monochloressigsäure oder einem ihrer Salze oder hydrolysierbaren Derivaten durchführt.

**Claims**

1. Process for the preparation of water-soluble mixed cellulose ethers comprising the following steps:

a) alkalization of the cellulose in the presence of an organic solvent and water,
b) first etherification of the alkali cellulose in the presence of a base, using at least one first etheryfying agent,
c) after increasing the quantity of base, second ehterification of the cellulose ether prepared in step b), using at least one second etherifying agent which differs from the first etherifying agent,

characterized in that, for steps a) and b), dimethoxyethane or a mixture thereof with an alkanol, an alkanediol and/or an alkoxyalkanol is used as an organic dispersing agent and the latter is removed from the reaction mixture by distillation prior to carrying out step c).

2. A process as claimed in claim 1, wherein the etherification in step b) is carried out using a compound of the general formula

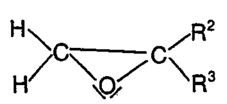

in which $R^2$, $R^3$ denote a hydrogen atom or an alkyl radical from $C_1$ to $C_{13}$, $R^2$ being identical with $R^3$ or different therefrom.

3. A process as claimed in claim 1 or claim 2, wherein the etherification in step c) is carried out using a compound of the general formula

$$Hal\text{–}R^1$$

in which $R^1$ denotes an alkyl radical from $C_1$ to $C_{15}$, an aralkyl radical from $C_7$ to $C_{15}$, a carboxyalkyl radical from $C_1$ to $C_3$, a sulfonoalkyl radical from $C_1$ to $C_3$, a phosphonoalkyl radical from $C_1$ to $C_3$, a hydroxyalkyl radical from $C_1$ to $C_6$ or a N,N-dialkylamino radical, in which the alkyl groups are from $C_1$ to $C_3$, and Hal denotes chlorine or bromine.

4. A process as claimed in any of claims 1 to 3, wherein an alkanol from $C_1$ to $C_5$, an alkanediol from $C_2$ to $C_3$ and/or an alkoxy ($C_1$ to $C_4$) alkan ($C_2$ or $C_3$) ol are used in a mixture with dimethoxyethane.

5. A process as claimed in claim 2, wherein the etherification of step b) is carried out using ethylene oxide and/or propylene oxide.

6. A process as claimed in claim 3, wherein the etherification of step c) is carried out using methyl chloride or monochloroacetic acid or one of the salts or hydrolizable derivatives.

**Revendications**

1. Procédé pour la préparation d'éthers mixtes de cellulose solubles dans l'eau, dans les étapes suivantes

a) alcanisation de la cellulose en présence d'un solvant organique et d'eau,
b) première éthérification de l'alcalicellulose en présence d'une base, avec au moins un premier agent d'éthérification,
c) après augmentation de la quantité de la base, seconde éthérification de l'éther de cellulose préparé dans l'étape b), avec au moins un deuxième agent d'éthérification différent du premier agent d'éthérification,

caractérisé en ce que l'on utilise en tant qu'agent auxiliaire organique de dispersion pour les étapes a) et b) le diméthoxyéthane ou des mélanges de celui-ci avec un alcanol, un alcanediol et/ou un alcoxyalcanol, et on l'élimine hors du mélange réactionnel par distillation, avant d'effectuer l'étape c).

2. Procédé selon la revendication 1, caractérisé en ce que l'on effectue l'éthérification dans l'étape b) avec un composé de formule générale

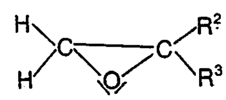

dans laquelle $R^2$, $R^3$ représentent un atome d'hydrogène ou un groupe alkyle en $C_1$–$C_{13}$, $R^2$ étant identique à $R^3$ ou différent de celui-ci.

3. Procédé selon la revendication 1 ou 2, caractérisé en ce que l'on effectue l'éthérification dans l'étape c) avec un composé de formule générale

$$Hal\text{–}R^1$$

dans laquelle $R^1$ représente un radical alkyle en $C_1$–$C_{15}$, un radical aralkyle en $C_7$–$C_{15}$, un radical carboxyalkyle en $C_1$–$C_3$, un radical sulfonoalkyle en $C_1$–$C_3$, un radical phosphonoalkyle en $C_1$–$C_3$, un radical hydroxyalkyle en $C_1$–$C_6$ ou un radical N,N-dialkylaminoalkyle à groupes alkyle en $C_1$–$C_3$, et Hal représente le chlore ou le brome.

4. Procédé selon l'une des revendications 1 à 3, caractérisé en ce que l'on utilise en mélange avec le diméthoxyéthane un alcanol en $C_1$–$C_5$, un alca-

nediol en $C_2$–$C_3$ et/ou un alcoxy($C_1$–$C_4$)-alcane($C_2$ ou $C_3$)-ol.

5. Procédé selon la revendication 2, caractérisé en ce que l'on effectue l'éthérification de l'étape b) avec de l'oxyde d'éthylène et/ou de l'oxyde de propylène.

6. Procédé selon la revendication 3, caractérisé en ce que l'on effectue l'éthérification de l'étape c) avec du chlorure de méthyle ou l'acide monochloracétique ou un de ses sels ou dérivés hydrolysables.